# EUROPEAN PATENT APPLICATION

(11) **EP 1 059 796 A2**
(43) Date of publication of application: **13.12.2000**
(21) Application number: 99307833.6
(22) Date of filing: 05.10.1999
(51) Int. Cl.: H04M 3/428, H04M 7/00

(54) **Rerouting telephone calls over the Internet during an active Internet sessions**

(30) Priority: 07.06.1999 US 326686
(71) Applicant: Comverse Network Systems, Inc., Wakefield, Massachusetts 01880 (US)
(72) Inventor: Rallabandi, Prasad, Woburn, MA 01801 (US); Jakobsche, George J., Concord, MA 01742 (US); Hoffmann, Howard A., Wilmington, MA 01887 (US); Beckers, J. Randall, Rockville, MD 20853 (US)
(74) Representative: Skone James, Robert Edmund

(57) **Abstract**

Telephone calls to a subscriber (10) are rerouted over the Internet (12) when the subscriber telephone line is busy servicing a browser-based Internet session without requiring that the subscriber disconnect or terminate the Internet session. When the subscriber initiates the Internet session, a unique identifier, different from the telephone number, is sent to a call servicing platform with the network address of the subscriber's computer. The telephone system transfers telephone calls to a subscriber telephone line that is busy to the call servicing platform (22). The platform (22) determines whether the subscriber line is busy due to an interactive Internet session based on whether the unique identifier had been previously sent. When a session is in progress, the platform informs the subscriber via a network message to the subscriber's personal computer (10) involved in the session that a call is waiting. If the subscriber accepts the call, the platform (22) digitizes the speech of the caller and sends it to the computer where it is output to the subscriber. At the same time, the computer digitizes the speech of the subscriber and sends it to the platform, where it is output to the caller. The system can also allow the subscriber to screen the caller by listening to the caller as a message is recorded. The network session can continue during the transfer of the speech or resume after the call is finished, that is, the session need not be terminated to free the telephone line to carry the call.

## Description

The present invention is directed to the field of packet-switched network telephony and, more particularly, to a system that allows a network user using a network, such as the Internet, to receive a telephone call through a call answering system while interacting with the network without disconnecting from the network, thereby integrating local telephone service with the Internet using the call answering system.

Many people access the Internet from their home using a 14.4 or 28.8Kbps modem over their single residential phone line. When a subscriber accesses the Internet in this way, they "tie up" their phone line, and are therefore unable to receive telephone calls from the public switched telephone network (PSTN), i.e. their line is "busy." With the advent of "Enhanced Services," residential customers can subscribe to "Call Answering," where a subscriber rents a mailbox from a service provider and the local telephone company automatically forwards busy and ring-no-answer calls to a voicemail system ("VMS," sometimes referred to as a "platform"), which contains the subscriber's voice mailbox. For example, when a subscriber uses the Internet, and the telephone line is busy, the mailbox is used to record and save messages. While this is better than giving the caller a busy signal, it requires that the subscriber log off of their on-line service to access their mailbox and check whether they have any message(s).

Another alternative is for a subscriber to enable a "call forward busy/no answer" telephone system feature each time he or she accesses the Internet, and then disable this feature after disconnecting from the Internet. When enabling the call forwarding feature, the subscriber provides the telephone number of a "subscriber proxy" so that busy/unanswered calls can be forwarded to the proxy. In addition, each time the subscriber's personal computer (PC) is connected to the Internet, the PC sends a message that contains the subscriber's telephone number to the proxy to register with the proxy. Some subscribers are reluctant to send this information over the Internet. Furthermore, this method is vulnerable to attack, because an unscrupulous person ("hacker") could cause his or her computer to send a subscriber's telephone number to the proxy, thereby registering the hacker's computer to receive notifications and forwarded calls.

What is needed is a secure and easy-to-use system that allows the subscriber to receive an indication on their PC that a call is waiting, and allows the subscriber to answer the call and speak to the calling party without disconnecting from the network session.

In accordance with one aspect of the present invention, a system comprises:
a packet-switched network;
a computer coupled to and conducting a session with said network over a telephone line having a telephone number;
a telephone system transferring a telephone call to the telephone number away from the telephone line when the telephone line is busy or unanswered; and
a call servicing system coupled to said telephone system and said network, receiving a unique identifier different from the telephone number to signify that said computer is conducting the session with said network, accepting the telephone call transferred by said telephone system and establishing a communication link with said computer over said network to carry the telephone call.

The present invention can provide a system that allows a subscriber to take a telephone call or, at the subscriber's discretion, direct the call to a mailbox, all without disconnecting from the Internet.

A telephone subscriber does not need multiple telephone lines from the PSTN to speak to calling parties while the subscriber uses the on-line service, thereby providing a significant cost saving to the subscriber.

The present invention can work with hardware that is commonly available and deployed today and does not require the subscriber to obtain special equipment, such as simultaneous voice and data modem.

The present invention allows a subscriber who has a system by which they access the Internet to use this system to answer a telephone call.

The present invention can integrate the Internet with call-answering and local telephone service.

The present invention allows the subscriber to screen calls by instructing the system to take a message from the caller and allow the subscriber to listen to the message over the network as it is recorded.

The present invention can also record facsimile messages and provide them to the subscriber while the subscriber is involved in a network session.

In some cases, the present invention allows the subscriber to receive a call over the network even when the subscriber is not using their residential telephone line and is away from home.

The present invention may perform echo cancellation of echoes produced by PSTN circuits.

Preferably, speech packets are not transferred when a party is silent.

The present invention preferably provides these services without requiring the subscriber to enable and subsequently disable a call forwarding feature, provide a forwarding telephone number to a proxy, or send the subscriber's telephone number over the Internet.

In one example, the system allows a subscriber to take a telephone call over a packet-switched network when the subscriber telephone line is busy servicing a network session, such as a browser-based Internet session, or the subscriber is away from home and involved in a network session. The system transfers an incoming telephone call from a subscriber telephone line that is busy or unanswered to a call servicing platform. The platform determines if the subscriber line is busy due to an interactive network session or if there is no answer because the subscriber is engaged in a network session at another location. In either case, if such a session is in progress, the platform informs the subscriber via a network message to the subscriber's computer involved in the session that a call is waiting. If the subscriber accepts the call, the platform digitizes the speech of the caller and sends it to the computer where it is output to the subscriber, and the computer digitizes the speech of the subscriber and sends it to the platform where it is output to the caller. If the subscriber chooses to screen the call, the caller is allowed to record a message and the message is provided to the subscriber over the network as the message is recorded. If the call is a facsimile call, the platform saves the facsimile message, and the subscriber can retrieve the facsimile message over the network during the network session. The network session can continue during the transfer of the speech packets, so that the subscriber need not terminate the network session to speak to the caller or receiver the caller's message or facsimile.

An example of a system and method according to the present invention will now be described with reference to the accompanying drawings, in which:-
Figure 1 depicts an integrated system according to the present invention;
Figure 2 and 3 depict techniques for assigning a unique ID to a subscriber PC;
Figure 4 illustrates the components of the platform 22 of Figure 1;
Figures 5 and illustrate the process performed by the PC 10 of Figure 1; and
Figures 7 and 8 mutate the process performed by the platform 22 of Figure 4.

The present invention allows a person using a packet-switched network, such as the Internet, to take a telephone call using their computer without disconnecting from the network. To help in understanding the invention, it is useful to describe the basic call flow of a typical Internet session.

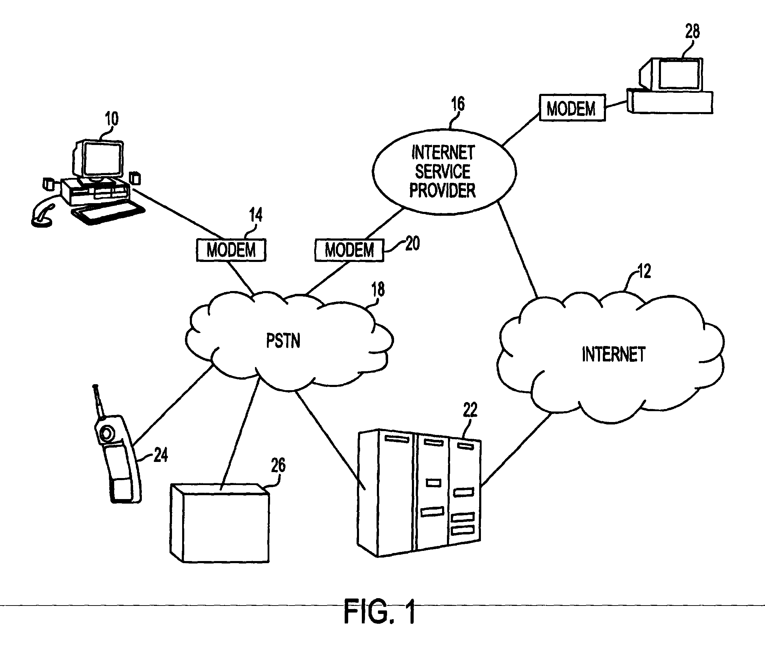

In a typical situation, a subscriber uses a PC 10 (see Figure 1) to access a packet-switched network 12, such as the Internet, by requesting that a modem 14 dial the access number for an Internet Service Provider (ISP) 16. The modem 14 uses a loop-start analog line connected to the local public switched telephone network (PSTN) 18 to dial a second modem 20 connected to the ISP 16. The PC 10 then uses a Serial Line Internet Protocol driver (SLIP) or Point-to-Point Protocol (PPP) to send and receive Internet Protocol (IP) packets over the modem serial connection between the PC 10 and the ISP 16. The ISP 16 routes IP packets received from the subscriber's PC 10 to the network 12, and routes packets from the network 12 to the subscriber's PC 10 via the modem connection. Preferably, the local PSTN 18 and the ISP 16 are owned by the same company, so that the subscriber will not be faced with multiple bills for the same set of integrated transactions, although the ISP 16 can be that of a company different from the local telephone service provider. Although loop-start analog telephone lines or "plain old telephone service" ("POTS") lines are used, the present invention does not rely on the type of telephone line used by the subscriber to connect to his or her ISP. Other types of telephone lines, such as ISDN or DSL, as well as telephone service provided over cable TV cables and wireless telephone service can be used as long as busy or unanswered calls are forwarded to a call servicing platform, as described below.

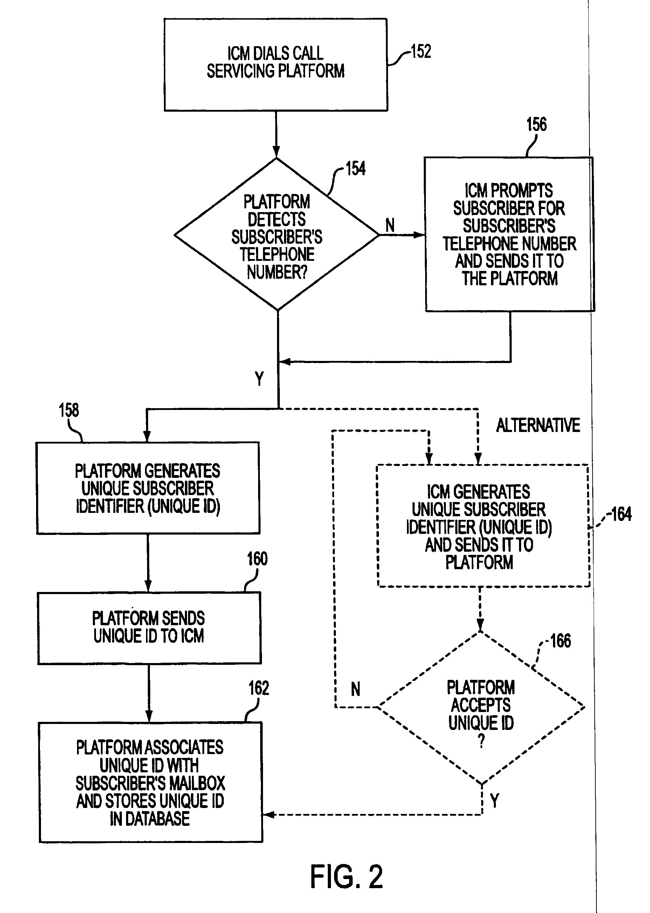

To prepare the PC 10 to handle forwarded calls, software (an "Internet Call Manager" or "ICM") is installed on the PC 10. The ICM can be supplied to the subscriber on a computer-readable medium, such as a floppy disk or CD-ROM, or the subscriber can download the ICM from an Internet site, bulletin board or other source. The ICM can be part of a larger software package, such as a browser, including as "plug-in" software. During installation of the ICM, the ICM is configured with a unique subscriber identifier. Preferably, the ICM, as shown in figure 2, uses the modem 14 to establish 152 a telephone connection with the call servicing platform 22. The ICM uses the modem 14 to dial the call servicing platform 22 over the telephone network 18 and to communicate with the platform, preferably by sending and receiving dual-tone multi-frequency (DTMF) tones. The ICM identifies the subscriber, or the subscriber's mailbox to the call servicing platform 22, by, for example, sending the subscriber's telephone number, but other identification information, such as the subscriber's name, mailbox number or account number, could be used instead. If the call is placed from the subscriber's telephone line, and the subscriber's telephone number is available to the call servicing platform, e.g. via calling line ID or caller ID, then the ICM may need not separately identify the subscriber and instead identifies 154 the subscriber's telephone number via caller ID. Otherwise, the ICM prompts 156 the subscriber for the identification information and then sends that information to the call servicing platform 22. The call servicing platform 22 then generates 158 and sends 160 the unique subscriber identifier over the telephone connection to the ICM, which preferably stores the unique identifier on the PC 10. The unique subscriber identifier can be a numeric, alphabetic or alphanumeric string, but it is not the subscriber's telephone number. The call servicing platform 22 stores the unique subscriber identifier in a database and associates 162 this unique identifier with the subscriber's mailbox. A conventional voicemail system (VMS) may be programmed to serve as the enhanced services platform 22.

Alternatively, the ICM can generate 164 the subscriber identifier using any known technique, such as those used in generating public keys for encryption, and send the subscriber identifier to the platform 22. Upon receipt of the subscriber identifier, the platform 22 can compare 166 the subscriber identifier with previously stored identifiers to verify that it is unique and, if so, associate the unique subscriber identifier with the subscriber's mailbox. If a duplicate identifier is generated by the ICM, the platform 22 can simply instruct the ICM to generate a new subscriber identifier and repeat the process.

Alternatively, the subscriber can "manually" configure the ICM by entering the unique subscriber identifier into the ICM during configuration. In this case, the subscriber can get the unique subscriber identifier by calling a customer service representative, such as when the subscriber subscribes to this service. In this case, the customer service representative interacts with a system, which can be the call servicing platform 22 or a separate system, that generates the unique subscriber identifier and also sends it to the call servicing platform 22. If the subscriber calls from his or her telephone, and the subscriber's telephone number is available to the customer service representative, e.g. via calling line ID, then the subscriber may not need to separately identify his or her telephone number or mailbox number to the customer services representative.

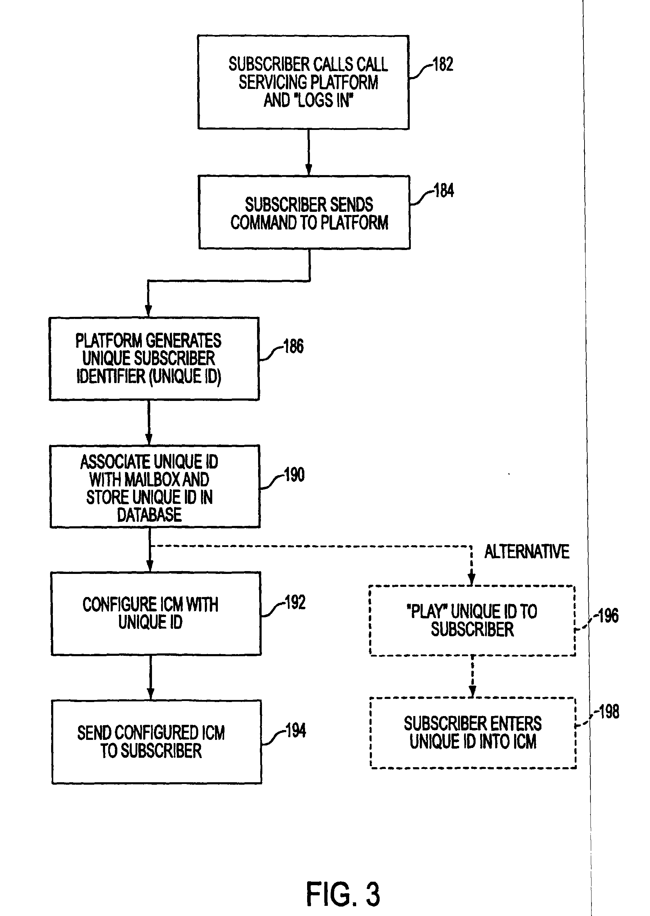

As another approach, as depicted in Figure 3, the subscriber can get the unique subscriber identification from the call servicing platform 22 over a voice line. In this case, the subscriber calls 182 the call servicing platform 22, as though the subscriber were going to retrieve messages or administer his or her mailbox, and interacts with the platform through DTMF key presses or voice commands 184 to cause the platform to generate 186 and announce the unique subscriber identifier. If the subscriber calls from his or her telephone, and the subscriber's telephone number is available to the call servicing platform 22, e.g. via calling line ID, then the subscriber need not separately identify his or her telephone number or mailbox number to the platform. If the subscriber's telephone number is not available, or the subscriber calls from another telephone, then the subscriber can enter his or her telephone number or other identification through DTMF key presses or voice commands. The platform then associates 190 the unique ID with the subscriber's mailbox and stores the ID in the database.

The subscriber does not need to have the ICM software prior to contacting the platform to obtain the unique subscriber identifier as described above. If the subscriber's identification has been validated, by having accessed his or her mailbox on the platform 22 or by other means, such as interaction with a customer service representative, the ICM can be configured 192 with the unique ID and sent 194 to the subscriber as a physical package through the mail, or by e-mail. Alternatively, the unique identifier or other identity verification can be given 196 to the subscriber over the voice line, so that the subscriber can subsequently download the ICM over a computer communication network, such as the Internet. The ICM may be preconfigured prior to being sent or downloaded, so that the subscriber will only need to install the software and use it. If not, the subscriber can insert 198 the previously provided unique subscriber identifier during the installation process, as described above.

Once the ICM is installed and configured, when the subscriber's PC 10 is connected to the network 12, the ICM can be used to handle a call that is directed to the subscriber's telephone line, but that can not be completed, because the subscriber's line is either busy or unanswered. When the subscriber's PC 10 is connected to the network 12, the ICM or other software application or process on the subscriber's PC 10 registers the IP address of the PC 10, or another address that allows the platform 22 to send messages to the PC 10, with the platform 22 by sending a message (a "registration" packet) with the IP address of the PC 10 and the unique subscriber identifier. The unique subscriber identifier and IP address may be transmitted from the PC 10 to the platform 22 after encryption using a public keyword provided by the platform 22, or in any other secure manner. If there is no apparent correlation between a unique subscriber identifier and the corresponding subscriber's telephone number, then unauthorized registration by a hacker is difficult, even if communication between the PC 10 and the call servicing platform 22 is not encrypted.

The platform 22 stores the subscriber's IP address in the subscriber database associated with this subscriber. Prior to the configuration process described above, the subscriber database contains, among other items, the subscriber's telephone number, i.e., the number of the telephone line whose busy, or no-answer, calls are to be handled by the platform 22. The subscriber's telephone number is referred to as having been "provisioned" on the platform 22. The public switched telephone network (PSTN) 18 and the platform 22 are "provisioned", so that if a call is placed to the subscriber, but the subscriber's telephone line is either busy or unanswered, the call is forwarded to the platform. This provisioning is performed by the telephone or voicemail service provider and remains in place as long as the subscriber subscribes to the voicemail service. The subscriber is not required to provision his/her telephone line prior to connecting to the Internet. The registration process associates the subscriber's PC IP address with the provisioned telephone number. Security and encryption mechanisms (such as available from RSA) are preferably used to ensure that the subscriber's PC 10 is the PC registered to control the provisioned telephone number (so that "hackers" cannot usurp phone calls intended for other parties).

Once the address registration is completed, the subscriber typically interacts with the network 12 using a conventional interface, such as a browser. While the subscriber is on-line with the ISP 16 over the subscriber's telephone line, the subscriber's PSTN phone line is busy. When a calling party 24 wishes to speak to the subscriber, the calling party 24 dials the telephone number for the subscriber. In this situation, a PSTN end office (not shown) forwards busy calls intended for the subscriber's telephone number to the platform 22. When the call arrives, the platform 22 examines automatic number identification (ANI) information associated with the incoming call (using a SMDI, SS7, ISDN, DID or an equivalent mechanism) and compares the called party number with the subscriber database to ascertain which subscriber is being called. The platform 22 also looks in the subscriber database record for the called subscriber to determine if an IP address is currently associated with the subscriber's telephone number. Since the subscriber is on-line and the registration process has been completed, there is an IP address associated with the subscriber, so the platform 22 initiates a conventional TCP/IP session with the software process running on the subscriber's PC 10 and sends a call-waiting notification to the process on the PC 10. The client software running on the subscriber's PC 10 notifies the subscriber that a call has arrived using, for example, a pop-up window, and optionally gives the subscriber the calling party information that was supplied by the PSTN 18 to the platform 22 to allow the subscriber to screen calls. If the subscriber was not connected to the network 12, but rather was using the telephone for voice, facsimile, or direct computer-to-computer communications, the TCP/IP session would not be established and the platform 22 would handle the caller as if no IP address was stored for the subscriber.

In a conventional manner, the calling party 24 will receive a ring-back signal, although a different signal can be sent to the calling party 24, so that the calling party 24 does not know that the subscriber's line is busy. The device that provides the ring-back signal to the calling party depends on the type of signaling interface that is used to connect the platform 22 to the PSTN 18. If the platform 22 is connected as "line side" equipment, the end or central office provides the ring-back signal until the platform 22 answers the call. When the platform 22 has answered the call or in a DID environment ("trunk side"), the platform 22 provides the ring-back signal. For simplicity of discussion herein the description simply refers to a ring-back signal being provided to the calling party 24.

If the subscriber chooses to answer the call, a notification message (an "accept" call packet) is sent back to the platform 22 via the network 12 indicating this fact. The platform 22 then answers the incoming call from the calling party 24 via the PSTN 18. At this point, the platform 22 digitizes the calling party's speech signal and transmits it, preferably via User Datagram Protocol (UDP/IP) packets, to the subscriber's PC 10. The platform 22 accepts UDP/IP speech packets via the network 12 from the subscriber's PC 10 and plays them to the calling party 24 through the telephone. A similar process occurs at the same time on the subscriber's PC 10, where software and hardware on the subscriber's PC 10 digitizes speech from a PC microphone and sends the digitized speech via UDP/IP packets to the platform 22 and accepts UDP/IP speech packets from the platform 22 and plays them over the PC 10 speaker to the subscriber.

If the calling party 24 hangs up, signaling information is sent via the PSTN 18 to the platform 22 indicating this fact. The platform 22 then notifies the software running on the subscriber's PC 10 via the network 12 that the calling party 24 has disconnected. At this time, call event records can be generated on the platform 22 for billing purposes.

As an additional feature, the subscriber can configure the platform 22, via the PC 10 over the network 12, to notify the subscriber of calls arriving from only particular calling parties by creating or updating a list of numbers and corresponding people maintained in the subscriber database for the subscriber for this purpose. In this case, the platform 22 examines the calling parry telephone number supplied by the PSTN 18. If the calling party telephone number matches a number on the list defined by the subscriber, then the platform 22 initiates the call as described above. If, however, the calling party number does not match (or if no calling party information was supplied), then the platform 22 can either provide a busy signal back to the calling party or the platform can immediately answer the call and take a voice or facsimile message, as the platform 22 does conventionally in a call answering application.

Note that the subscriber's telephone line need not necessarily be in use to have calls redirected to the PC 10. For example, if the subscriber is away from home and has access to the network 12 via an ISP, then the subscriber can notify the platform 22 to direct calls via the network 12 to the subscriber's PC 10 wherever the subscriber happens to be at that time. In this case, the PSTN 18 must be configured to forward either all calls to the platform 22, or to forward ring-no-answer calls to the platform 22, although this configuration is typical for voicemail subscribers.

Finally, the call to the platform 22 need not arrive via the PSTN 18 shown in Figure 1. Instead, the call could also have originated via the digital IP network 12. In this case, the "originating" platform 26 communicates with the subscriber's "home" platform 22 to determine if the subscriber is currently accepting calls via the PC 10, and if so the subscriber's IP address is provided to the originating platform 26 and the originating platform 26 plays the role of platform 22 in Figure 1. The originating platform 26 plays the role of the platform 22 in this situation because the caller is connected to that originating platform 26. The originating platform 26 could be another PC 28. In either case, the platform 22 is no longer involved as it is only used to obtain the subscriber's IP address. The originating platform 26 communicates directly to the PC 10 using the IP address associated with the subscriber on platform 22. In this situation, if the subscriber declines the call, the originating platform 26 records a message for the subscriber. The originating platform 26 then sends the message via the network 12 to the subscriber's "home" platform 22, where it is stored.

Optionally, when the subscriber disconnects the PC 10 from the network 12, the ICM sends an "unregistration" packet to the call servicing platform 22. Consequently, the platform 22 removes the PC's IP address from the subscriber database, and the platform handles busy/unanswered calls conventionally.

In another embodiment, the ICM on the PC 10 does not register with the call servicing platform 22. Instead, the PC 10 "advertises" its availability to handle calls by registering with a directory service, such as an Internet Locator Service (ILS), and the call servicing platform 22 uses this directory service to locate the PC 10 when a busy or unanswered call is forwarded to the platform. In this case, the directory service stores the unique subscriber identifier or other subscriber identification information, such as the subscriber's name, account number or mailbox number, and the call servicing platform queries the directory with similar subscriber identification information.

The PC 10 depicted in Figure 1 is preferably a conventional multimedia Pentium® class personal computer having a full-duplex sound card, speakers, a microphone, a modem with preferably a speed of at least 28Kbps to allow the sending and receiving of speech data in real-time" and an operating system such as Windows®95, 98 or NT®. The software running on the PC for the present invention is typically a client PC application or process that executes in "parallel" with the browser. However, the PC 10 could include a conventional Internet browser, such as Netacape® Navigator or Microsoft® Internet Explorer, that allows "plug-in" applications to be automatically initiated while the user is browsing sites on the network 12 with the client PC application running as a plug-in. The PC 10 also includes a conventional Internet telephony/voice package, such as TrueSpeech, that performs speech signal compression and decompression. The client PC process, as well as the browser, can be provided to the subscriber via a floppy disk or downloaded via the network 12 for storage on the hard disk medium of the PC 10 when the subscriber signs up or registers for service over the network 12.

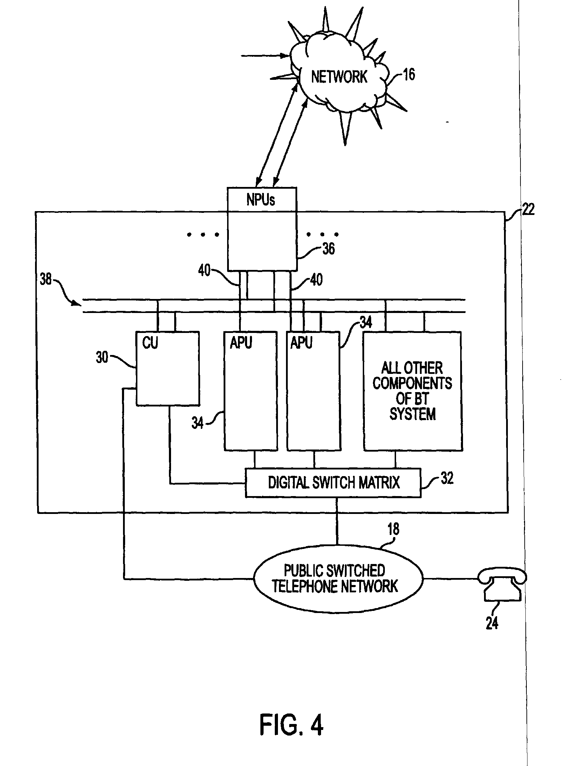

The platform 22 preferably has an architecture, as illustrated in Figure 4, that is based on the distributed voice mail platform described in U.S. Patent 5,029,199. The platform 22 includes a control unit (CU) 30 which communicates with the PSTN 18 for telephone call control and routing. An incoming call is routed through a digital switch 32 to form a connection between an application processing unit (APU) 34, which performs the call processing of the platform 22, and the PSTN 18. The digital switch 32 and the routing control by the CU 30 are not required when ports of the APU 34 are dedicated to the telephony operation of the invention and a central office switch is provided within the PSTN 18 that hunts for an available trunk to the dedicated APU 34. The digitized speech packets of the caller 24 can be transferred between the APU 34 and a network processing unit (NPU) 36 over an internal ETHERNET 38. The system also can include a high speed 100 Mbps ETHERNET connection 40 directly between the APU 34 and NPU 36. The NPU 36 is essentially a conventional IP router, such as available from Cisco Systems or Bay Networks, through which the digital speech packets are routed to the PC 10. Each of the units 30 and 34 is based on a personal computer, such as an Intel Pentium® 133/166 MHZ processor with 32M RAM, 4GB mirrored/redundant disk drives running the Microsoft® WindowsNT® operating system and coupled together by the 10Mb ETHERNET 38, such as found in the AccessNP™ system available from Comverse Network Systems, Inc. The processes of the present invention are typically stored on disk drives and loaded into RAM for execution as needed. The units also include appropriate conventional interface units, such as voice modules from Natural Microsystems including a high speed digital signal processor (DSP), necessary to perform the interface function of that particular unit. It is also possible for the NPU 36 to be configured with the voice logic circuits necessary for the NPU 36 to also perform the functions of the APU 34. That is, a single processor can handle the interface and routing functions.

Although not shown in Figure 4, the APU 34 preferably includes echo cancellation technology, such as that available from Coherent Communications, located on the PSTN "side" of the platform 22 to cancel echoes that are produced in the 2-to-4-wire hybrid circuits of the PSTN 18. Because of the delay associated with the packet-switched network 12, the echo is noticeable and annoying to the subscriber at PC 10 and is preferably cancelled.

During a typical incoming telephone call to a platform, such as platform 22, the CU 30 of the platform uses the telephone number dialed by the calling party to control the switch 32 to route the call from the incoming trunk to an available voice port of an APU 34 that includes a network telephony application. The CU 30 also informs the particular APU 34 assigned the call that the call is arriving on the available port.

The network telephony application of the APU 34 interacts with the calling party using a conventional process to cause a ringing signal to be provided to the caller while the PC 10 is being queried. While the ringing signal is being played, the APU 34 accesses a subscriber database, typically maintained by the CU 30, to obtain the IP address of the PC 10. If the subscriber database stores no IP address, the APU 34 performs conventional operations to allow the caller 24 to leave a message for the subscriber.

On the other hand, if the database stores an IP address, the IP address is used by the APU 34 from a packet to be sent to the PC 10. The packet includes a message or notification indicating that a call is waiting as well as the ANI information of the caller. This "call waiting packet" is provided to the NPU 36, which routes it to the PC 10. When the PC 10 responds with a message accepting the call, the APU 34 establishes a virtual connection over the Internet 16 to the PC 10. Once the PC 10 has accepted the call and a connection has been established, the APU 34 samples the incoming speech of the calling party and compresses the speech using a compression procedure, such as the low bit rate procedure available from DSP Group known as TrueSpeech/G.723 and which is typically used for the audio portion during video conferencing (see www.dspg.com for detailed information about this technology). Of course other compression algorithms, such as u-law or A-law (G.711) can be used. The APU 34 then sends speech segment sample UDP packets over the internal ETHERNET 40 through the NPU 36 to the PC 10. The APU 34 also performs conventional call monitoring operations on the caller's trunk looking, for example, for a dial tone indicating that the caller has hung-up.

The processes discussed below with respect to the present invention are described for convenience using flow charts that depict the operations as flowing from one operation to another. However, the processes are preferably implemented as interrupt driven processes. For example, during a conversation, the PC 10 digitizes the speech of the subscriber and sends it to the platform 22 to be played to the caller, and when the subscriber "clicks" on a window button to hang-up, this click is detected by an interrupt manager that then executes the hang-up process.

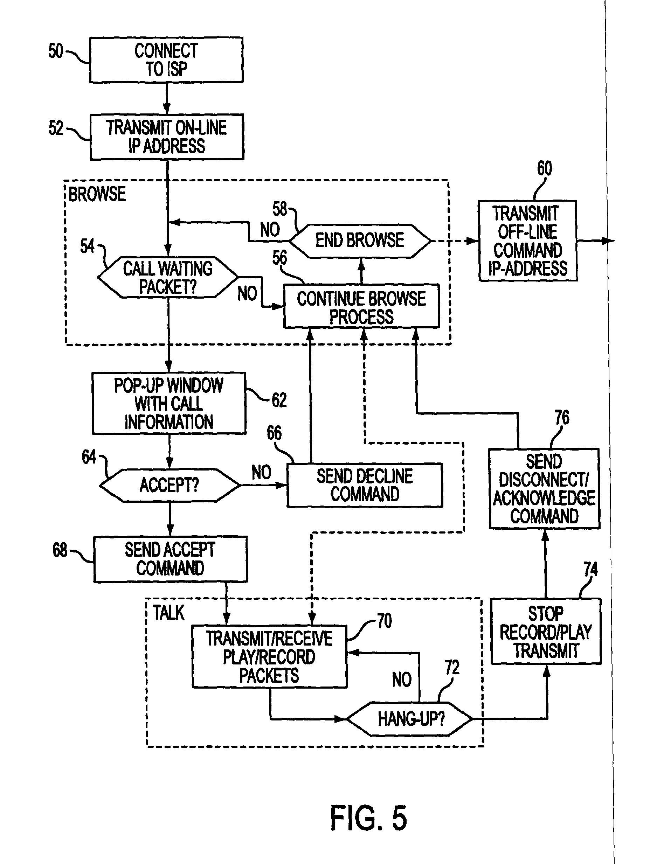

The PC 10, as previously mentioned establishes a connection 50 to the ISP 16 as depicted in Figure 5. Once the connection is established, the PC 10, using the platform IP address (PIP) of the subscriber's home platform 22, transmits 52 an "on-line" command or "notification" packet to the platform 22 that includes the IP address and port number (PCIPPN) of the PC 10. This occurs in the following manner.

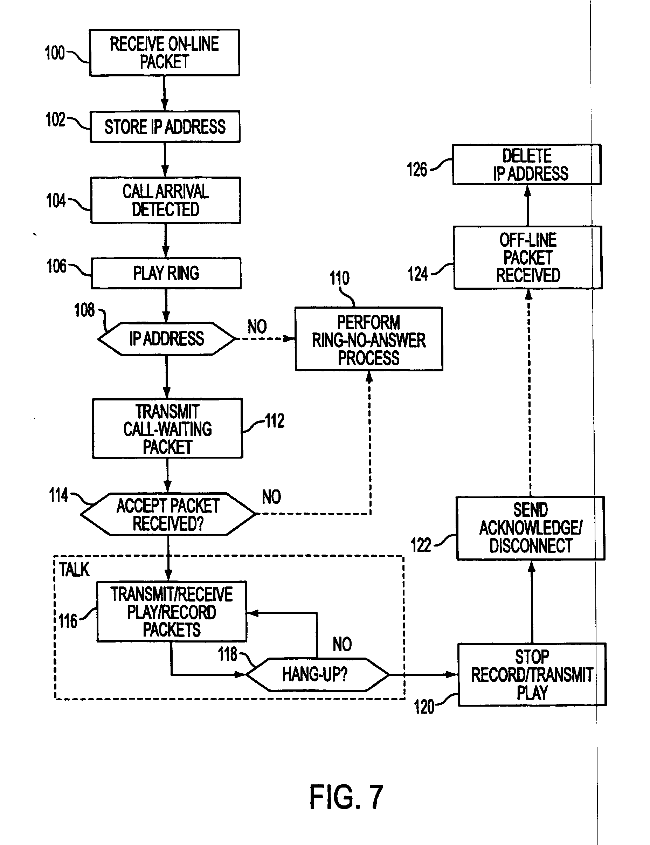

The client PC software or process, which is configured to execute each time the PC 10 starts a network session, requests a TCP port from the operating system, such as Windows® 95. The process also requests from the operating system the IP address of the PC 10. It should be noted that this IP address can change for each network session that the subscriber invokes. Using the configuration information that was previously entered into the PC 10 by a sign-on process or by the subscriber, the client PC process "registers" with the client's (subscriber's) platform 22. The client's platform 22 is known by a specific machine name, such as "anp12.bostech.com." The client process uses the Domain Name Service (DNS) of the ISP 16 to translate the machine name of the platform 22 to its IP address. The client process then connects (via TCP/IP) to the IP address returned by DNS, at a particular TCP port number (PN). The port number is "hard coded" to refer to a particular service or application and in this case the service may be called "Internet Call Waiting Registration Service" using the IP address and port number (PIPPN) of the platform. For example, the "http" service is (by default) at TCP port "80." After connecting to the platform 22, the client process sends a packet to the platform. This packet includes the following information: the subscriber's unique subscriber identifier assigned to the ICM, as described above, the IP address of the PC 10, and the TCP port number (PN) that the PC operating system provided to the client process. Additional security may be obtained by also requiring a password or other identification of the user, such as a signature or a fingerprint, input when the subscriber logged onto the network. The platform stores this IP address and port number (PCIPPN) in the subscriber's database record (see 102 of Figure 7) using the subscriber's telephone number.

The PC 10 then "returns" to the normal browser process where the subscriber uses the browser to access various sites on the Internet through the ISP 16. During this period, each time an IP packet arrives, it is routed 54 to the appropriate process based on the IP address and port number (PCIPPN). When the packet is not a "call-waiting" packet (or a "TCP connect" packet), the packet is provided to the browser process and the browser process continues 56. When the user has finished browsing and a disconnect interrupt is detected, the PC 10 sends an "off-line" command packet to the platform 22 that includes the PCIPPN, which causes the platform 22 to delete the PCIPPN from the subscriber's database record (see 126 of Figure 7).

When the packet is a "TCP connect" packet from the platform 22 the client PC process responds with a "TCP accept" packet. The client process then waits for a "call waiting" packet.

When the packet is the "call waiting" packet which includes the UDP port number (UPN) of the platform, the client PC process of the present invention receives the packet and "pops-up" 62 a window on the PC 10 that informs the subscriber that a call is waiting and provides information, such as the caller ID of the caller, etc. If the caller's name and ID are in a caller database on the PC 10, the caller's name can also be displayed. The window preferably includes a button that allows the subscriber to accept or reject (decline) the call. The window also preferably includes a button that allows the subscriber to "screen" the call.

If the user selects the "decline" option, the PC 10 sends 66 a "decline" command or notification packet to the platform 22 (APU 34), which then performs a conventional ring-no-answer process that allows the caller to record a message (see 110 of Figure 7).

If the subscriber accepts 62 the call, the PC 10 obtains a UDP port number (UPN) from the operating system, sends 68 an "accept" command packet to the PIPUPN of platform 22 (APU 34) that includes the UDP port number, so that the APU 34 can respond with speech packets to the PCIPUPN. The PC then begins 70 digitizing the speech of the subscriber, sending speech packets to the platform 22 using the PIPUPN as a destination address, accepting speech packets of the caller's speech from the platform 22 addressed to the PCIPUPN and playing those packets to the subscriber.

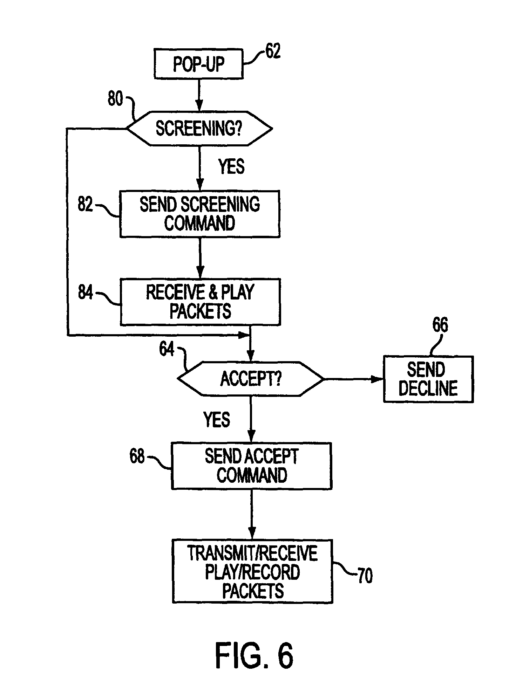

If the subscriber selects 80 the "screen" option (see Figure 6), the PC 10 sends 82 a "screen" command packet to the platform 22 at the PIPUPN. The APU 34 of platform 22 immediately begins recording and saving a message as though the subscriber had declined the call. The APU 34 also copies the speech segments, creates speech packets from the copy, and transmits the packets to the PC 10 using the PCIPUPN as the destination address. The PC 10 performs 84 the receive and play operations of the talking phase previously discussed, thus allowing the subscriber to listen to the message as it is recorded, but without the caller knowing that the message is being heard by the subscriber as it is being recorded. The record and transmit operations of the talk phase are not performed by the PC 10, resulting in no speech packets being sent by the PC 10 to the platform 22. In this process the APU 34 stores speech segments on the message storage disk at the same time that the segments are transmitted to the PC 10. The subscriber can listen to the message long enough to choose whether to accept the call. The subscriber can then decline the call, which will continue the recording but disconnect the call being transferred to the PC 10. Alternatively, the subscriber can accept 64 the call and the operations (70) previously discussed that establish the bi-directional connection and allow two way speech packets to be transmitted are performed, the recording process is terminated and the recorded message is discarded.

During a period of UDP packet exchange between the PC 10 and platform 22, each side sends each UDP packet wit a monotonically increasing packet sequence number. The receiving side discards any packet that arrives with a sequence number that is less than or equal to the packet sequence number of the packet that is currently playing (or has completed playing).

The platform 22 and PC 10 also preferably perform a silence detection operation and do not send speech packets when the parties are not speaking, thereby conserving network resources. In this situation, the other side does not receive speech packets during a silent period and "plays" silence to the party. The silence detection operation preferably has a very short silence-to-energy detection threshold period (<5ms) to insure that all the speech of the parties is captured and there is little or no speech clipping. The operation preferably has a relatively long energy-to-silence detection threshold period (>500ms). By meeting these criteria, computing resources are not wasted flipping back and forth between energy/silence.

During the period (70) of speech packet exchange (see Figure 5), the network session can be stopped by the user, can be put in a wait state by the user or can continue using the multi-processing capabilities of Windows® 95, which is depicted by the bi-directional dashed line between the browser 56 and talk 70 steps. That is, in a session continuation situation, if the network session is updating/sending a page to the PC 10, the session can continue running in a main window of the PC 10 while the caller and the subscriber talk. In this situation, to facilitate the processing of the speech, the speech digitization and transmission operations of the PC 10 are preferably given a higher priority than the network session processing, and the processing of the speech packets received by the PC 10 is preferably given a higher priority than the processing of the network session packets. To allow the session to continue while the caller and the subscriber are talking, preferably a high speed network connection using a 56Kbps modem or an ISDN line is used. It is also possible to prioritize processing and reserve bandwidth by using some of the more recently proposed IP protocols, such as RSVP.

If the PC 10 determines that a hang-up 72 (see Figure 5) has been initiated, by receiving a "hang-up" command packet from the platform 22 or the user activates a hang-up button in the window, the PC 10 stops 74 digitizing the subscriber's speech, stops transmitting speech packets to the platform 22 and stops playing speech packets received from the platform 22. The PC 10 then sends 76 an "acknowledge" or disconnect command packet to the platform 22 and resumes the browsing process 56.

In the platform 22, as depicted in Figure 7, when an "on-line" packet is received 100, the IP address (PCIPPN) is stored 102 in the subscriber's database record, and the platform awaits a call arrival 104 from the caller 24. When a call is transferred to the platform 22 by the central office switch of the PSTN 18, and the APU 34 answers the call, a ringing signal is played 106 to the caller, and the APU 34 examines 108 the subscriber database record to determine if there is an PCIPPN (IP address and TCP port number) stored for the subscriber. If not, a conventional ring-no-answer process is performed 110 by the APU 34 to allow the caller to leave a message for the subscriber.

If a PCIPPN is available for the subscriber, the APU 34 starts a timer and sends a "TCP connect" packet to the PCIPPN. When a "TCP accept" packet arrives from the PC, the APU 34 of the platform 22 then sends 112 a "call waiting" packet (in TCP format) to the PC 10 using the PCIPPN. The call waiting packet includes the IP address and the UDP port number (PIPUPN) of the application or process servicing the caller 24.

If after a short interval a response is not received from the PC 10 to the "TCP connect' packet, the platform 22 can send another "TCP connect" packet and continue to send them several more times. If after several such transmissions, there is no connect accept ("TCP accept") response from the client PC process, then the platform 22 (APU 34) assumes that the subscriber has disconnected from the network and the platform 22 removes the PCIPPN from the subscriber database. The call is then processed 110 conventionally to, for example, take a message.

After the TCP connect, the platform 22 (APU 34) is then essentially waiting 114 for an "accept", "decline" or "screen" command packet. If the "accept" (or "screen") packet does not arrive within the predetermined time-out period or if a "decline" packet is received, the APU 34 performs the ring-no-answer process 110 as if a "decline" command packet had been received (and the PCIPPN is not deleted).

Since the subscriber PC can be involved in a compute intensive communication with the ISP 16, it is possible for the platform 22 to use a TCP connect failure counter to count the number of failures and only delete the PCIPPN when the number of failures exceeds some predefined value.

When an "accept" packet is received, the APU 34 begins 116 (See Figure 7) digitizing the speech of the caller, providing the speech segment packets with the PCIPUPN to the NPU 36, which routes the speech packets to the PC 10. At the same time, the NPU 36 begins accepting subscriber speech packets from the PC 10 including the PIPUPN and providing (routing) the speech packets to the APU 34, which plays the digitized speech of the subscriber to the caller 24. When a hang-up is installed 118, such as by the caller hanging up or the platform 22 receiving a "disconnect" command packet, the APU 34 stops 120 digitizing the caller's speech segments, stops supplying the packets to the NPU 36 at stops converting subscriber speech segments into speech output to the caller. The platform 22, in the case of a "disconnect" command from the PC 10, sends 122 an "acknowledgment" notification to the PC 10 and, in the case of a hang-up by the caller, sends a "disconnect" command to the PC 10.

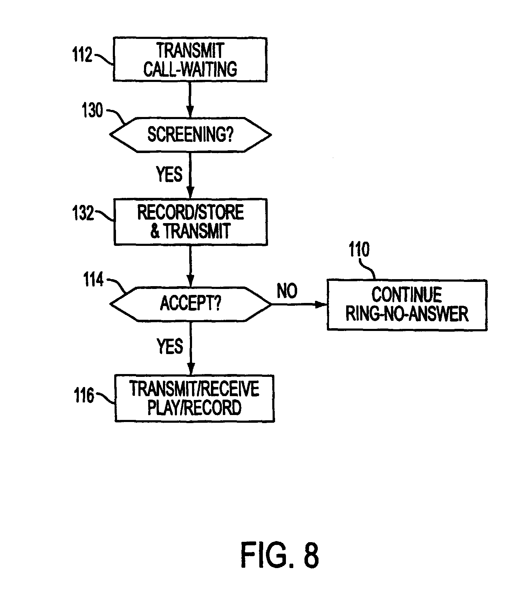

As previously discussed, if a "screen" command packet is received, the APU 34 (see Figure 8) records and stores a message using the conventional message recording process and also sends 132 the speech segments in packets to the PC 10 for playing to the subscriber. If an "accept" command is received 114 while the call screening process is being performed, the APU 34 switches to the talk process 116 previously discussed.

Once the exchange of speech packets has been discontinued, the platform 22 waits for another call arrival 104 or for the arrival 124 (See Figure 7) of an "off-line" command packet. When the "off-line" command, which includes the PCIPPN, arrives, the APU 34 accesses the subscriber database in the CU 32 and deletes 126 the network address of the subscriber.

On occasion the caller may not be a person but may be a machine, such as a facsimile machine. When the call is a facsimile call, after the subscriber has decided to accept the call and the APU 34 begins digitizing the input signal, the call monitoring process of the APU 34 recognizes that the signal is a facsimile "poll" tone (CNG). The APU 34 causes the DSP therein to switch to the function of a facsimile modem. The APU 34 also notifies the subscriber at PC 10 that the call is a facsimile call and drops the network call between the platform 22 and the PC 10 by sending an appropriate "disconnect" packet. The APU 34 continues to receive the facsimile signal and stores it as a facsimile message in a unified mailbox as described in U.S. Patent Application Serial No. 08/743,793. After the message has been stored, the subscriber can access the message over the network 12 and retrieve it while remaining connected to the ISP 16. As an alternative, the APU 34 can digitize the facsimile one page at a time and the pages can be transmitted as "html" pages over network 12 to the PC 10 browser using the PCIPPN of the browser, and the subscriber can then choose to display, save or print the pages.

The present invention has been described with respect to establishing a telephone call over a packet-switched network, such as the Internet, however, it is possible for the call to be established over other types of packet-switched networks, such as an intranet. The invention could also be implemented using the types of modems that allow simultaneous data and voice transmissions over the same telephone line. The invention can also be used with the emerging standards (incorporated herein by reference) being developed for the Internet, such as H.323, H.245 and T120 that allow the call to be a videophone call and allow call conferencing, and with emerging protocols (incorporated by reference herein), such as RSVP which allows the reservation of resources for a desired level of service quality, and RTP and RTCP, which enhance the timeliness and synchronization of the packets.

The present invention has been described with respect to the APU 34 receiving a call and playing a ringing signal to the caller while the APU 34 queries the subscriber. It is also possible, when the platform 22 receives ANI signaling, that the APU 34 performs the look-up and queries the subscriber before answering the call, thereby allowing the end office to provide the ringing signal to the caller.

The present invention has also been described with respect to using the microphone and speaker of a conventional multi-media computer. However, it is possible to substitute a telephone handset for the microphone and speaker.

## Claims

1. A system, comprising:
a packet-switched network;
a computer coupled to and conducting a session with said network over a telephone line having a telephone number;
a telephone system transferring a telephone call to the telephone number away from the telephone line when the telephone line is busy or unanswered; and
a call servicing system coupled to said telephone system and said network, receiving a unique identifier different from the telephone number to signify that said computer is conducting the session with said network, accepting the telephone call transferred by said telephone system and establishing a communication link with said computer over said network to carry the telephone call.

2. A system as recited in claim 1, wherein the communication link is a voice communication link established during the session.

3. A system as recited in claim 1 or claim 2, wherein said call servicing system stores a message of the caller when the computer declines to establish the communication link.

4. A system as recited in any of claims 1 to 3, wherein said computer sents a network address of said computer with the unique identifier to said system when the session is initiated.

5. A system as recited in any of claims 1 to 4, wherein the telephone call is a single direction call from the call servicing system to the computer.

6. A system as recited in any of claims 1 to 5, wherein said computer obtains the unique identifier from said call servicing system and stores the unique identifier for communication with said call servicing system, prior to initiating the session with said network.

7. A system as recited in any of claims 1 to 6, wherein said computer generates and stores the unique identifier and sends the unique identifier to said call servicing system in a separate communication session with said call servicing system prior to initiating the session with said network.

8. A system, comprising:
an Internet network;
a computer coupled to and conducting a browsing session with said Internet network over a telephone line having a telephone number;
a telephone system transferring a telephone call from a caller to the telephone number away from the telephone line when the telephone line is busy; and
a call servicing system, coupled to said telephone system and said Internet network, receiving a network address of said computer and a unique identifier different from the telephone number to signify that said computer is conducting the session with said network, accepting the telephone call transferred by said telephone system, informing said computer that the telephone call is waiting, establishing a voice communication packet-switched link with said computer over said Internet network using the telephone line with the link carrying speech of the telephone call when the telephone call is accepted by said computer, the link being established using the network address for said computer during the session, the session continuing over the telephone line while the link is established to carry the telephone call, and said call servicing system storing a message of the caller when said computer declines to establish the link.

9. A system, comprising:
a packet-switched network;
a computer coupled to and conducting a session with said network;
a telephone system transferring a telephone call to a telephone number of a called telephone away from the called telephone when the telephone call is not answered; and
a call servicing system coupled to said telephone system and said network, accepting the telephone call transferred by said telephone system and establishing a communication link with said computer over said network to carry the telephone call based on receipt of a unique identifier identifying said computer and different from the telephone number of the called telephone.

10. A method of providing voice communication using a computer connected to a network via a telephone line having a telephone number, comprising:
sending a unique identifier, different from the telephone number, and the network address of the computer when a network session is initiated;
establishing a communication link over the network between the computer and a call servicing system when a telephone call for the telephone number is received by the call servicing system; and
conducting a telephone call over the communication link during the network session.

11. A method, comprising:
conducting a telephone call to a telephone number, through a computer involved in a packet-switched network session, the computer having a network address and identified by a unique identifier different from both the telephone number and the network address.

12. A method as recited in claim 11, wherein the telephone call and the session are carried by a same telephone line between the computer and the network.

13. A method as recited in claim 12, further comprising multi-tasking the session and the call with the call having a higher priority.

14. At least one computer program embodied on a computer readable medium to perform a method of providing voice communication using a computer connected to a network via a telephone line having a telephone number, comprising:
sending a unique identifier, different from the telephone number, and the network address of the computer when a network session is initiated;
establishing a communication link over the network between the computer and a call servicing system when a telephone call for the telephone number is received by the call servicing system; and
conducting a telephone call over the communication link during the network session.

15. A method, comprising:
detecting arrival of a telephone call to a telephone number while a computer conducts a network session with a network coupled to the computer via the telephone line;
establishing a communication link to the computer over the network, based on receipt of a unique identifier different from the telephone number; and
conducting the telephone call over the communication link during the network session.

16. A method as recited in claim 15,
further comprising:
determining that the network session is in progress when a unique identifier, different from the telephone number, and the network address of the computer are received; and
storing the network address of the computer when the computer initiates the network session, and
wherein said establishing of the communication link uses the network address stored when the network session was initiated.

17. A system coupled to a packet-switched network and a telephone system transferring a telephone call away from the telephone line when the telephone line is busy, said system comprising:
a computer coupled to and conducting a session with the network over a telephone line having a telephone number; and
a call servicing system coupled to the telephone system and the network accepting the telephone call transferred from the telephone line and establishing a communication link with said computer over the network with the link carrying the call based on receipt of a unique identifier different from the telephone number.

18. A call servicing system coupled to a packet-switched network and a telephone system which transfers a telephone call to a telephone number away from a telephone line when the telephone line is busy and a computer is coupled to and conducting a session with the network over the telephone line, said call servicing system comprising:
a platform to accept the telephone call transferred from the telephone line and to establish a communication link with the computer over the network with the link carrying the call based on receipt of a unique identifier different from the telephone number.

19. A computer connectable to a packet-switched network via a telephone line having a telephone number, comprising:
a modem connectable to the packet-switched network;
a storage unit, coupled to said modem, to store a unique identifier different from the telephone number;
a processor, coupled to said modem, to transmit the unique identifier upon connection to the packet-switched network;
a sound unit capable of inputting and outputting speech signals to a user; and
a browser capable of conducting a telephone call over the packet-switched network during a network browsing session using said modem and said sound unit.

20. At least one computer program embodied on a computer readable medium to perform a method comprising:
detecting arrival of' a telephone call to a telephone number while a computer conducts a network session with a network coupled to the computer via the telephone line;
establishing a communication link to the computer over the network, based on receipt of a unique identifier different from the telephone number; and
conducting the telephone call over the communication link during the network session.
